# EUROPEAN PATENT SPECIFICATION

(11) **EP 3 985 778 B1**
(45) Date of publication and mention of the grant of the patent: **14.02.2024**
(21) Application number: 20934605.5
(22) Date of filing: 24.12.2020
(51) Int. Cl.: H01M 10/0585, H01M 10/0583, H01M 4/62, H01M 50/46, H01M 4/139, H01M 4/04, H01M 10/04, H01M 10/052

(54) **METHOD FOR MANUFACTURING SECONDARY BATTERY HAVING IMPROVED RESISTANCE**
VERFAHREN ZUR HERSTELLUNG EINER SEKUNDÄRBATTERIE MIT VERBESSERTEM WIDERSTAND
PROCÉDÉ DE FABRICATION D'UNE BATTERIE SECONDAIRE À RÉSISTANCE AMÉLIORÉE

(30) Priority: 06.05.2020 KR 20200054039
(43) Date of publication of application: 20.04.2022
(73) Proprietor: LG Energy Solution, Ltd., Seoul 07335 (KR)
(72) Inventor: RYU, Ji Hoon, Daejeon 34122 (KR); KIM, Hyun Min, Daejeon 34122 (KR); HAN, Song Yi, Daejeon 34122 (KR)
(74) Representative: Plasseraud IP
(86) International application number: PCT/KR2020/019051
(87) International publication number: WO 2021/225248

(56) References cited:
- EP-A1- 3 872 917
- WO-A1-2005/078832
- WO-A1-2017/197406
- WO-A1-2019/208958
- CN-A- 110 504 491
- KR-A- 20060 045 320
- KR-A- 20140 113 186
- KR-A- 20190 040 295
- KR-A- 20190 088 333

## Description

### [Technical Field]

This application claims the benefit of priority based on Korean Patent Application No. 10-2020-0054039, filed on May 6, 2020.

The present invention relates to a method for manufacturing a secondary battery with an improved resistance by using an electrode slurry containing succinonitrile when manufacturing a lithium secondary battery.

### [Background Art]

With the increase in technology development and demand for mobile devices, the demand for secondary batteries is also rapidly increasing. Among them, lithium secondary batteries are widely used as an energy source for various electronic products as well as various mobile devices because of their high energy density and high operating voltage and excellent storage and lifetime characteristics.

Secondary batteries are classified into coin-type batteries, cylindrical batteries, prismatic batteries, and pouch-type batteries according to the shape of the battery case. In a secondary battery, an electrode assembly mounted inside a battery case is a power generating element capable of charging and discharging having a stacked structure of electrodes and separators.

The electrode assembly may be classified into a jellyroll type which is wound with a separator interposed between sheet-type positive electrode and negative electrode coated with the active material, a stack type in which multiple positive electrodes and negative electrodes are sequentially stacked with a separator interposed therebetween, and a stack/folding type in which stack-type unit cells are wound with a long separation film.

Among them, in the case of a battery having a stack type or a stack/folding type structure, a lamination process of bonding an electrode and a separator during battery manufacturing is essential. The lamination process is a process of attaching an electrode and a separator, and if the electrode and the separator fall apart, the yield and processability are very poor when assembling the battery. In addition, it is impossible to assemble a stacked or stacked/folded battery without a lamination process.

Conventionally, for the lamination process, a binder layer was formed on the surface of the separator, and thereafter, the electrode and the separator were bonded under high temperature and high pressure conditions. However, during this process, damage to the separator occurs, and the binder used as an adhesive remains melted and acts as a resistance in the battery, thereby deteriorating battery performance.

In particular, in the case of the negative electrode, since the components of the binder used in the electrode are different from the components of the separator binder, they are not bonded well even after the lamination process. Hence, a greater pressure was necessary at the time of lamination. At this time, the resistance of the positive electrode increased due to a strong pressure.

Specifically, in the lamination process, the electrode is laminated in the order of positive electrode/ separator negative electrode, and then heat and pressure are applied to the laminated electrode (lamination cell). As such, the same heat and pressure are applied to the positive electrode and the negative electrode. In the case of the positive electrode, the binder material in the electrode is PVDF, which is the same as the binder used in the separator. As such, the adhesive force is sufficiently secured at a low temperature/pressure. However, in the case of the negative electrode, CMC and SBR are used as the binder, and thus the adhesive force with the separator is low. Therefore, in order to secure the adhesive force of the negative electrode, application of a high temperature and a high pressure is essential, and thus as the lamination process is excessively performed for the positive electrode, the binder at the interface between the positive electrode and the separator melts, thereby acting as a resistance on the interface. Further, as the pores of the separator between the positive electrode and the negative electrode are reduced due to an excessive pressure, the resistance increases.

Therefore, there is a need for a method for manufacturing a secondary battery capable of preventing a damage of a separator and an increase of a resistance of a positive electrode due to a high temperature and a high pressure during a lamination process.

KR 2006 0045320 A and WO 2005/078832 A1 disclose an electrode comprising succinonitrile dispersed in the electrode.

### [Disclosure]

### [Technical Problem]

The present invention has been created to solve the above problems and relates to a method of manufacturing a secondary battery which may improve an adhesive force between a negative electrode and a separator during a lamination process, minimize damage to a separator and a positive electrode by a high pressure, and improve a resistance in a battery.

### [Technical Solution]

The method for manufacturing a secondary battery with improved resistance according to the present invention is defined in the appended set of claims, the method includes:
a step of preparing an electrode slurry containing a solvent and an electrode mixture containing succinonitrile (S 1); a step of preparing an electrode by coating the electrode slurry to a current collector and drying the electrode slurry (S2); a step of preparing an electrode assembly by alternately laminating the electrode and a separator (S3); a lamination step of heating and pressing the electrode assembly (S4); and a step of accommodating the laminated electrode assembly in a battery case and injecting an electrolyte solution (S5).

In one example, a content of the succinonitrile is 5 to 40% by weight based on a total weight of the electrode mixture.

In another example, the step (S 1) of preparing the electrode slurry includes a step of uniformly dispersing the succinonitrile in the electrode slurry.

In one example, the step (S2) of preparing the electrode includes: a step of applying the electrode slurry on one or opposite surfaces of the current collector; and a step of drying the electrode to which the electrode slurry has been applied.

In a specific example, in the step of drying the electrode slurry, a distribution of the succinonitrile is rearranged so that a content of the succinonitrile of an electrode surface layer far from the current collector becomes greater than a content of the succinonitrile of an electrode inner layer close to the current collector.

Further, in the step of drying the electrode slurry, the succinonitrile is positioned on an upper portion or surface of the electrode. The upper portion means the end region of the electrode located in a direction far from the current collector, and the surface means one surface contacting the separator, not the current collector.

In another example, the step (S2) of preparing the electrode includes: a step of solidifying liquid succinonitrile by cooling the electrode, to which the electrode slurry has been applied, to a room temperature.

In one example, the lamination step of heating and pressing the electrode assembly (S4) includes: a step of heating the electrode assembly to a temperature of a melting point or more of the succinonitrile.

Specifically, a heating temperature of the electrode assembly is 57°C or more, and the electrode assembly is pressed at a pressure of 30kgf/cm or less.

At this time, the succinonitrile acts as a binder between the electrode and the separator.

In another example, in the step of accommodating the laminated electrode assembly in a battery case and injecting an electrolyte solution (S5), the succinonitrile in the electrode is eluted to the electrolyte solution.

### [Advantageous Effects]

Since the method for manufacturing a secondary battery according to the present invention does not require a high-pressure process as in the prior art during the lamination process, damage to the separator and electrode can be minimized and process cost can be reduced.

Further, since succinonitrile located on the surface of the electrode serves as an adhesive between the electrode and the separator, adhesive force between the electrode and the separator may be improved.

Further, since the succinonitrile in the electrode is dissolved in the electrolyte solution, there is no resistor on the electrode and the interface between the electrode and the separator. As such, the resistance of the battery may be reduced, which is an advantage.

### [Brief Description of the Drawings]

FIG. 1 is a schematic diagram showing a conventional secondary battery manufacturing method.
FIG. 2 is a flowchart illustrating a method of manufacturing a secondary battery according to the present invention.
FIG. 3 is a schematic diagram showing a method of manufacturing a secondary battery according to one embodiment of the present invention.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

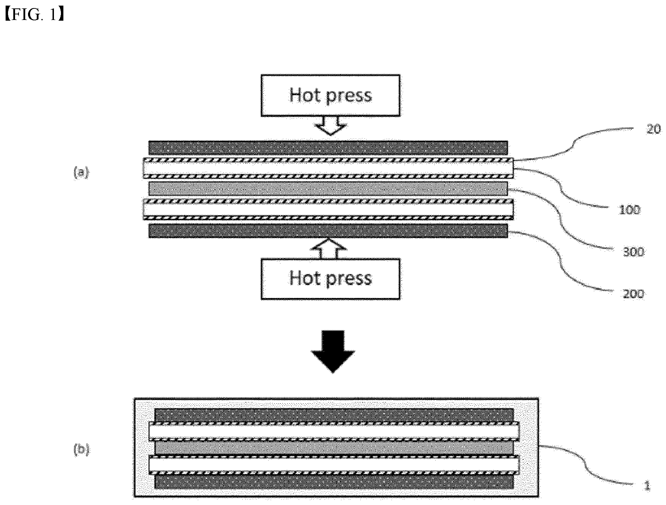

FIG. 1 is a schematic diagram showing a conventional secondary battery manufacturing method.

Referring to FIG. 1, in a battery constituting an existing secondary battery, a binder coating layer 20 is provided on opposite surfaces of the separator 100 in the battery. The first electrode 200 and the second electrode 300 were alternately disposed on each side of the binder coating layer 20 to thereby manufacture an electrode assembly. Thereafter, a lamination process was performed on opposite sides of the stacked electrode assembly under conditions of high temperature/high pressure as shown in FIG. 1(a).Thereafter, as shown in FIG. 1(b), the electrode assembly was accommodated in a battery case, and an electrolyte solution was injected to manufacture a secondary battery 1.

In the conventional method as described above, the binder coating layer 20 was used to increase the adhesive force between the separator 100 and electrodes 200 and 300, but in the manufacture of the secondary battery 1, since the binder coating layer 20 still remains as an element, there is a problem of deteriorating the performance of the battery by binder coating layer 20 acting as an internal resistance.

Further, a mixture of styrene-butadiene rubber (SBR), and carboxymethyl cellulose (CMC) is used as the negative electrode binder, and polyvinylidene fluoride (PVDF) is used as the positive electrode binder and the binder of the binder coating layer on the separator.

In a general negative electrode, since the components of the binder in the negative electrode are different from the components of the binder of the binder coating layer 20 on the separator 100, adhesive force decreased during the lamination process. As such, stronger pressure was required during the lamination process.

In the case of a positive electrode same as or similar to the binder components of the separator, the resistance continually increased due to a high pressure lamination process for improvement of adhesive force between the negative electrode and the separator.

The present invention relates to a method of manufacturing a secondary battery having improved resistance in order to solve the above problems.

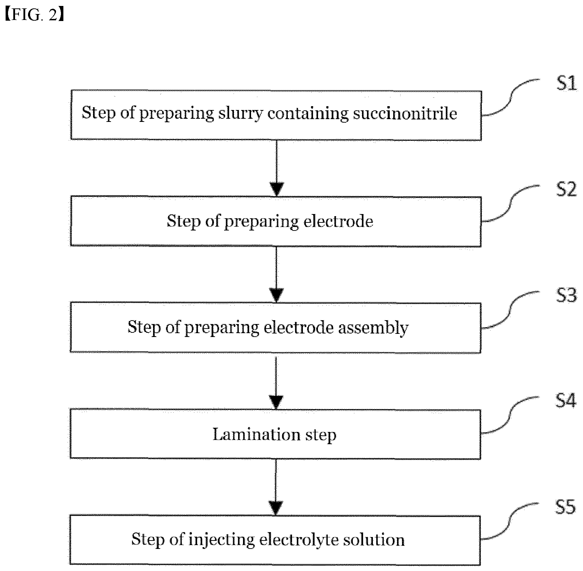

Referring to FIG. 2, a method for manufacturing a secondary battery according to the present invention includes:
a step of preparing an electrode slurry containing a solvent and an electrode mixture containing succinonitrile (S 1); a step of preparing an electrode by coating the electrode slurry to a current collector and drying the electrode slurry (S2); a step of preparing an electrode assembly by alternately laminating the electrode and a separator (S3);
a lamination step of heating and pressing the electrode assembly (S4); and a step of accommodating the laminated electrode assembly in a battery case and injecting an electrolyte solution (S5).

First, succinonitrile (SN) will be described. Succinonitrile is a material mainly used as an electrolyte additive for lithium secondary batteries. Succinonitrile does not interfere with the formation of the SEI (Solid Electrolyte Interface) film of the negative electrode, and does not change the cycle life and capacity of the battery.

In addition, succinonitrile exists in the state of a very viscous wax at room temperature, and its melting point is 57°C, so the succinonitrile is present in a liquid state under higher temperature conditions. Therefore, succinonitrile is converted into a wax form when cooled to room temperature after liquefaction, and can serve as an adhesive between the electrode and the separator.

Further, since the succinonitrile is easily dissolved in water, succinonitrile, which is solid in a room temperature, may be dissolved in water and exist in a liquid state.

Further, since the succinonitrile may be dissolved in a non-aqueous solvent such as a carbonate solvent, the succinonitrile, which exists in the form of an adhesive, may be dissolved and dispersed in the electrolyte solution when injecting the electrolyte solution, thereby acting as an additive to the electrolyte solution.

Hereinafter, a secondary battery manufacturing method of the present invention will be described in detail by steps.

First, the step (S 1) of preparing the electrode slurry includes a step of uniformly dispersing the succinonitrile in the electrode slurry.

As such, the electrode slurry shows a structure in which an electrode active material, a binder, a conductive material, and succinonitrile are uniformly dispersed in a solvent. Specifically, an aqueous solvent or NMP, a non-aqueous solvent, etc. may be used as the solvent in the electrode slurry according to the present invention. Succinonitrile, a binder, and a conductive material may be mixed to prepare a pre-dispersion slurry, and an electrode active material may be added to the pre-dispersion slurry, to thereby manufacture an electrode slurry according to the present invention. At this time, the succinonitrile may be dissolved in water, to thereby be evenly dispersed in the slurry in a liquid form. The manufacturing order or method of the pre-dispersion slurry is not limited to the above example.

Second, a step (S2) of manufacturing an electrode, in which an electrode mixture layer is formed, is performed by applying the electrode slurry, in which the succinonitrile has been uniformly dispersed, which has been prepared in the step (S1) of preparing an electrode slurry, and drying the electrode.

Specifically, the step (S2) of preparing the electrode may include: a step of applying the electrode slurry on one or opposite surfaces of the current collector; and a step of drying the electrode to which the electrode slurry has been applied. After the step of applying the electrode slurry to the current collector, the step of drying the electrode may be sequentially performed, or the applying and the drying may be simultaneously performed.

In the above process of drying the electrode, the electrode slurry coated on the current collector forms an electrode mixture layer as the solvent is removed. At this time, the content of the succinonitrile may be 0.1 to 5% by weight, preferably 1.5 to 2% by weight, based on the total weight of the electrode mixture. At this time, the total weight of the electrode mixture refers to the weight of the portion which remains after removing the solvent through drying in the electrode slurry. When the content of the succinonitrile is in the above range, the electrode may be stably bonded to the separator, and the resistance of the battery can be maintained low. If the content of the succinonitrile is less than 0.1% by weight, the adhesive force between the electrode and the separator can be reduced, and if the content of the succinonitrile exceeds 5% by weight, the resistance of the battery can be increased.

Further, in the step of applying and drying the electrode slurry on the current collector, the content and arrangement of the succinonitrile evenly dispersed in the slurry may be changed before and after the drying process. The drying temperature is different by sections and is preferably 110°C.

An electrode slurry layer is formed on the current collector in a state before the slurry is applied on the current collector and is dried. In this case, succinonitrile is dissolved in a solvent such as water in the electrode slurry layer, the succinonitrile is evenly dispersed in the entire area of the slurry layer.

However, as the solvent in the electrode slurry is vaporized in the drying process, the distribution of the succinonitrile in the electrode mixture layer becomes different from the distribution in the electrode slurry.

Generally the density of the succinonitrile is 0.985g/cc. As the solvent in the electrode slurry layer is evaporated, due to a low density, the succinonitrile moves along the evaporation direction of the solvent. Namely, the succinonitrile, which has been uniformly dispersed in the electrode slurry layer applied on the current collector, moves to an electrode slurry layer region, which is far from the current collector, through evaporation of the solvent during the drying process.

As such, in the step of drying the electrode slurry applied to the current collector, a distribution of the succinonitrile is rearranged so that a content of the succinonitrile of an electrode surface layer far from the current collector becomes greater than a content of the succinonitrile of an electrode inner layer close to the current collector. Specifically, the content of the succinonitrile in the electrode mixture layer may form a concentration gradient toward the electrode surface layer from the electrode inner layer near the current collector.

In addition, the succinonitrile is located on a region far from the current collector, that is, on the upper portion or surface. Herein, the upper portion means the end region of the electrode located in a direction far from the current collector, and the surface means one surface contacting the separator, not the current collector. Further, the description that the succinonitrile is located on the upper portion or surface of the current collector indicates that 90% or more of the succinonitrile included in the electrode mixture layer is located on the upper portion or surface of the electrode mixture layer.

Meanwhile, the step (S2) of preparing the electrode of the present invention may include a step of solidifying liquid succinonitrile by cooling the electrode, to which the electrode slurry has been applied, to a room temperature. Specifically, the succinonitrile, which exists inside the electrode mixture layer on the current collector after the drying process, exists in a liquid state due to the heat applied to the electrode mixture layer during the drying process. The liquid succinonitrile inside the electrode mixture layer is finally solidified through the process of cooling the electrode to a room temperature after the drying process. As mentioned in the description about the succinonitrile, if the succinonitrile is cooled to a room temperature after being liquefied, it is changed to a was form so that it can serve as a binder if heat is applied during the lamination process.

After performing the step (S2) of preparing an electrode, a step of preparing an electrode assembly by alternately laminating the electrode and a separator (S3) is performed. In the present invention, the electrode may be a positive electrode and/or a negative electrode. The step of preparing an electrode assembly may be performed in a well know method, and in the present invention, it is preferable to prepare a stack-folding type or stack type electrode assembly. As will be described later, the succinonitrile serves as a binder between the electrode and the separator.

After performing the step (S3) of manufacturing the electrode assembly, a lamination step (S4) of heating and pressing the manufactured electrode assembly is performed.

Specifically, in the lamination step of the present invention, the electrode assembly is heat and pressed at a temperature of a melting point of the succinonitrile or more, specifically 57°C or more, preferably 60°C to 70°C, and the pressure range is 30kgf/cm or less.

In the conventional lamination process, a pressure of 10 to 50 kgf/cm is applied under a temperature condition of 70 to 100°C.Through this, the electrode and the separator are strongly attached, and the thickness of the separator fabric is generally reduced by about 10% through the lamination process as described above.

However, in the lamination step of the present invention, the electrode assembly is heated and pressed at a temperature of 57°C or more, preferably at 60°C to 70°C. As the electrode assembly is laminated at the temperature, the succinonitrile, which has been in a solid state after the step (S2) of preparing an electrode, is liquefied. As such, liquefied succinonitrile is evenly dispersed at the interface between the electrode and the separator according to the pressure applied to the electrode assembly at the lamination step. Further, since the lamination process is performed at a relatively low temperature through the above temperature conditions unlike the conventional lamination process, not only the process cost can be reduced, but also a damage such as shrinkage of the separator due to a high temperature can be prevented.

Further, the succinonitrile in the electrode acts as a binder between the electrode and the separator. Specifically, the succinonitrile is evenly dispersed at the interface between the electrode and the separator due to the heat and pressure at the lamination step. Liquid succinonitrile may improve the adhesive force between the electrode and the separator due to its sticky characteristic. Thereafter, after the lamination process, the succinonitrile in a room temperature is solidified in a wax form and serves as a binder for bonding the electrode and the separator.

Further, the lamination step is performed by pressing the electrode assembly at a pressure of 30 kgf/cm or less, preferably 1 to 10 kgf/cm, and more preferably 1 to 5 kgf/cm. In the present invention, as the electrode and the separator are bonded using the succinonitrile located on the upper portion or surface of the electrode mixture layer, a strong pressure is not necessary. This not only reduces the process cost, but also prevents physical damage to the separator due to high pressure.

In the lamination process, the electrode assembly to be transferred is passed between a pair of rollers and pressed to bond to each other. Specifically, in the lamination process, a heater is connected to a pair of pressing rollers to apply heat to the electrode assembly and pressurize to bond to each other.

In the present invention, lamination is performed using a pressing roller, but it is also possible to apply press lamination. In this case, it is preferable to use a pressure of 1/10 to 1/5 of the pressure conditions of general press lamination.

Likewise, the succinonitrile on the surface of the electrode may improve the adhesive force between the electrode and the separator. This can solve the problem of a damage to a separator which may occur due to a high temperature and high pressure lamination process and may solve the problem of an increase of a resistance of the positive electrode of a battery. Further, this may reduce the binder content inside the binder layer which exists in the surface of the separator used for the electrode assembly. Further, since a high temperature and high pressure lamination process is not required, the effect of reduction of process costs can be expected.

Finally, the step (S5) of accommodating the laminated electrode assembly in a battery case and injecting an electrolyte solution is performed.

Specifically, in the step (S5) of accommodating the laminated electrode assembly in a battery case and injecting an electrolyte solution, as the electrolyte solution is injected, the succinonitrile in the electrode is eluted to the electrolyte solution and is removed from the interface between the electrode and the separator. Thereafter, since the succinonitrile eluted to the electrolyte solution acts as an additive to the electrolyte solution, it is possible to prevent the succinonitrile from acting as a resistance component in the electrode mixture layer.

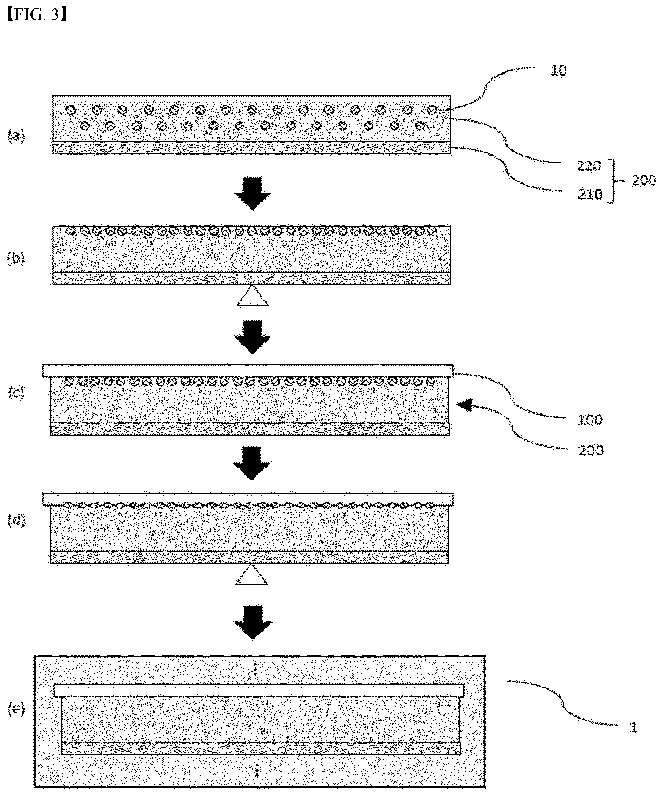

FIG. 3 is a schematic diagram showing a method of manufacturing a secondary battery according to one embodiment of the present invention. FIG. 3 illustrates only a negative electrode and a separator in an electrode assembly and omits a positive electrode portion. Further, it is also possible to apply the manufacturing method according to the present invention for the positive electrode.

FIG. 3(a) shows a state that a negative electrode slurry layer 220, in which succinonitrile 10 had been uniformly dispersed, has been applied on the negative electrode current collector 210. Thereafter, in FIG. 3(b), as dried in a high temperature, the solvent is evaporated, and the slurry layer becomes a negative electrode mixture layer, and at the same time, the succinonitrile 10 is arranged on the upper portion or surface of the negative electrode mixture layer. In FIG. 3(c), the separator 100 is laminated on the dried negative electrode 200, and in FIG. 3(d), the succinonitrile acts as a binder for bonding the negative electrode and the separator through a lamination process. Thereafter, in FIG. 3(e), as an electrode assembly including a negative electrode and a separator is accommodated in a battery case and an electrolyte solution is injected thereto, the succinonitrile is dissolved in an electrolyte solution solvent, and thus the succinonitrile does not exist in the electrode assembly.

In summary, since succinonitrile of the present invention acts as an adhesive means between the electrode and the separator, there is an advantage in that it is easy to adhere even in a lamination process of a lower temperature and pressure than the conventional one. In addition, since succinonitrile is dissolved in the electrolyte injection process, which is the rear end of the battery manufacturing process, and does not remain within the interface anymore, the resistance of the battery can be minimized, thereby exhibiting an effect of preventing performance degradation of the battery.

Hereinafter, the secondary battery used in the present invention will be described.

The electrode used in the present invention is an electrode for a lithium secondary battery. The lithium secondary battery includes, for example, an electrode assembly including a positive electrode, a negative electrode, and a separator interposed between the positive electrode and the negative electrode; a non-aqueous electrolyte impregnating the electrode assembly; and a battery case containing the electrode assembly and the non-aqueous electrolyte.

The positive electrode has a structure in which a positive electrode mixture layer is stacked on one or opposite sides of a positive electrode current collector. The positive electrode active materials may each independently be a lithium-containing oxide, and may be the same or different. A lithium-containing transition metal oxide may be used as the lithium-containing oxide. In one example, the positive electrode mixture layer includes a conductive material and a binder polymer in addition to the positive electrode active material, and if necessary, may further include a positive electrode additive commonly used in the art.

The positive electrode active material may be a lithium-containing oxide, and may be the same or different. A lithium-containing transition metal oxide may be used as the lithium-containing oxide.

For example, the lithium-containing transition metal oxide may be any one or a mixture of two or more selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, 0≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3). In addition, the lithium-containing transition metal oxide may be coated with a metal such as aluminum (Al) or a metal oxide. Further, in addition to the lithium-containing transition metal oxide, one or more of sulfide, selenide, and halide may be used.

The current collector used for the positive electrode is a metal having high conductivity, and any metal which the positive electrode active material slurry may be easily attached to and which is not reactive in the voltage range of the secondary battery can be used. Specifically, non-limiting examples of the current collector for the positive electrode include aluminum, nickel, or a foil manufactured by a combination thereof. Specifically, the current collector for the positive electrode is formed of metal components described above, and includes a metal plate having a through hole in the thickness direction, and an ion conductive porous reinforcing material filled in the through hole of the metal plate.

The negative electrode may further include a negative electrode mixture layer, and may include a carbon material, lithium metal, silicon, or tin.When a carbon material is used as the negative electrode active material, opposite low crystalline carbon and high crystalline carbon may be used. Representative examples of low crystalline carbon include soft carbon and hard carbon. Representative examples of high crystalline carbon include natural graphite, kish graphite, pyrolytic carbon, mesophase pitch based carbon fiber, mesocarbon microbeads, mesophase pitches, and high-temperature calcined carbons such as petroleum or coal tar pitch derived cokes.

Non-limiting examples of the current collector used for the negative electrode include copper, gold, nickel, or a foil manufactured by a copper alloy or a combination thereof. In addition, the current collector may be used by stacking substrates made of the above materials. Specifically, the current collector for the negative electrode is formed of metal components described above, and includes a metal plate having a through hole in the thickness direction, and an ion conductive porous reinforcing material filled in the through hole of the metal plate.

In addition, the negative electrode may include a conductive material and a binder commonly used in the art.

The separator may be made of any porous substrate used in a lithium secondary battery, and for example, a polyolefin-based porous membrane or a nonwoven fabric may be used, but the present invention is not particularly limited thereto. Examples of the polyolefin-based porous membrane include polyethylene such as high density polyethylene, linear low density polyethylene, low density polyethylene, ultra high molecular weight polyethylene, and a membrane in which polyolefin-based polymers, such as polypropylene, polybutylene, and polypentene, are each formed alone or in a mixture thereof.

A non-aqueous electrolyte containing a non-aqueous electrolyte solution may be used as the electrolyte solution. Examples of the non-aqueous electrolyte include N-methyl-2-pyrrolidinone, propylene carbonate, ethylene carbonate, butylenecarbonate, dimethyl carbonate, diethyl carbonate, gamma-Butyrolactone, 1,2-dimethoxyethane, tetrahydroxyfuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ethers, methyl pyrophosphate, ethyl propionate, etc.However, it is not particularly limited thereto, and a number of electrolyte components commonly used in the field of lithium secondary batteries may be added or subtracted within an appropriate range.

In addition, the present invention provides a vehicle or large-capacity energy storage device including the secondary battery described above. In a specific example, the vehicle is a hybrid or electric vehicle.

Hereinafter, the present invention will be described in more detail through examples. However, the embodiments described in the specification and the configurations described in the drawings are only the most preferred embodiments of the present invention.

### Examples and Comparative Examples

### Example 1

A non-aqueous electrolyte solution as a solvent was added to a positive electrode mixture containing 2 wt% of succinonitrile (SN), 2.5 wt% of PVDF (binder), 2.5 wt% of carbon black (conductive agent), and 93 wt% of LiCoO₂ as the positive electrode active material, to thereby prepare a positive electrode slurry, which was then applied on opposite surfaces of the current collector, and dried and rolled to thereby manufacture a positive electrode.

A non-aqueous electrolyte solution as a solvent was added to a negative electrode mixture containing 2 wt% of succinonitrile (SN), 1.5 wt% of SBR (binder), 1.0 wt% of CMC (binder), 2.5 wt% of carbon black (conductive agent), and 93 wt% of graphite as the negative electrode active material, to thereby prepare a negative electrode slurry, which was then applied on opposite surfaces of the current collector, and dried and rolled to thereby manufacture a negative electrode.

A porous polyethylene containing a coating layer containing 15 wt% PVDF binder was used as the separator.

A positive electrode was placed on one side of the separator, and a negative electrode was placed on the opposite side, and then laminated to manufacture an electrode assembly. At this time, the electrode assembly was roll-laminated at the condition of 80°C and 5 kgf/cm.

The laminated electrode assembly was accommodated in a pouch-type battery case, and an electrolyte solution was injected to manufacture a secondary battery.

Example 2: When SN content in the electrode mixture is set to 3% in Example 1

Example 3: When SN content in the electrode mixture is set to 4% in Example 1

Example 4: When SN content in the electrode mixture is set to 5% in Example 1

Example 5: In Example 1, SN is not contained in the positive electrode mixture, and SN is contained only in the negative electrode mixture by 2%.

Example 6: Change roll lamination pressure to 10 kgf/cm in Example 5

Example 7: Change roll lamination pressure to 30 kgf/cm in Example 5

Comparative example 1: When SN content in the electrode mixture is set to 0.05% in Example 1

Comparative example 2: When SN content in the electrode mixture is set to 7% in Example 1

Comparative example 3: Change roll lamination pressure to 50 kgf/cm in Example 5

Comparative example 4: in Example 5, SN is not contained in the positive electrode mixture, and SN is contained only in the negative electrode mixture by 0.05%.

**[Table 1]**

| Division | SN content in positive electrode mixture (weight%) | SN content in negative electrode mixture (weight%) | Roll lamination pressure (kgf/cm) | Binder content of binder coating layer of separator |
|---|---|---|---|---|
| Example 1 | 2 | 2 | 5 | 15 |
| Example 2 | 3 | 3 | 5 | 15 |
| Example 3 | 4 | 4 | 5 | 15 |
| Example 4 | 5 | 5 | 5 | 15 |
| Example 5 | 0 | 2 | 5 | 15 |
| Example 6 | 0 | 2 | 10 | 15 |
| Example 7 | 0 | 2 | 30 | 15 |
| Comparative Example 1 | 0.05 | 0.05 | 5 | 15 |
| Comparative Example 2 | 7 | 7 | 5 | 15 |
| Comparative Example 3 | 0 | 2 | 50 | 15 |
| Comparative Example 4 | 0 | 0.05 | 5 | 15 |

Two experiments were conducted on the secondary battery prepared as described above, and the results were recorded in Table 2.

### 1. Electrode adhesive force experiment

Measurement of electrode adhesive force: After manufacturing an electrode assembly of positive electrode/separator/negative electrode, the lamination process is performed, and then the lamination cell (state in which the electrolyte solution has been injected) is decomposed to measure the electrode adhesive force of negative electrode/separator. The results are shown in Table 2.

After cutting the electrode, which is generated by laminating the negative electrode/separator, to piece of a width of 20 mm and a length of 150 mm, the adhesive force was measured while detaching the separator from the negative electrode at a rate of 20mm/min at the angel of 90 degrees. When the adhesive force was 200 gf/20 mm, the electrode was bent. Specifically, when the adhesive force was 200 gf/ 20 mm or more, the adhesive force between the separator and the electrode is excessively strong, so that it is not possible to detach the separator from the electrode when measuring the adhesive force, thereby showing a phenomenon that the electrode is bent. In such a case, the resistance is generally high due to excessive lamination conditions.

### 2. Cycle characteristics test

For the secondary batteries prepared according to Examples 1 to 7 and Comparative Examples 1 to 4, a change in charge/discharge characteristics was tested using a charge/discharge measuring device. The obtained battery had the first cycle discharge capacity and efficiency by 0.2 C charging and 0.2 C discharging, and Table 2 shows the capacity compared to the 0.2C charge and 0.2C discharge results by performing 0.2C charging and 2.0C discharging.

**[Table 2]**

| Division | Negative electrode/separator adhesive force (gf/20mm) | 1^{st} cycle discharge capacity (mAh/g) | 1^{st} cycle Efficiency (%) | 2.0C/0.2C capacity Ratio (%) |
|---|---|---|---|---|
| Example 1 | 32 | 4.44 | 88.8 | 86.4 |
| Example 2 | 45 | 4.31 | 86.1 | 83.6 |
| Example 3 | 57 | 4.17 | 83.3 | 81.2 |
| Example 4 | 79 | 3.97 | 79.3 | 75.3 |
| Example 5 | 26 | 4.61 | 92.2 | 89.6 |
| Example 6 | 60 | 4.54 | 90.8 | 87.3 |
| Example 7 | 179 | 4.41 | 88.1 | 81.8 |
| Comparative Example 1 | 10.3 | 4.65 | 85.5 | 82.2 |
| Comparative Example 2 | 102 | 3.57 | 71.3 | 65.8 |
| Comparative Example 3 | 286 | 4.01 | 80.2 | 78.2 |
| Comparative Example 4 | 9.9 | 4.66 | 86.8 | 80.9 |

Referring to Tables 1 and 2, first, in the case of the examples of the present invention, the succinonitrile, which existed in the slurry in the drying step of the electrode manufacturing process, is moved to the upper portion of the electrode or the electrode surface layer, so that the succinonitrile is rearranged in the electrode. Namely, as the succinonitrile of a low density, which evenly existed in the electrode slurry, are rearranged from the electrode inner layer close to the current collector to an electrode surface layer far from the current collector through the electrode drying process, the succinonitrile is finally positioned on the upper portion or surface of the electrode. After manufacturing the electrode assembly, as the lamination process is performed, the succinonitrile, which is positioned on the surface of the electrode, is liquefied by the lamination condition, thereby acting as a binder for bonding the separator and the electrode. Thereafter, in the condition after the lamination process, the succinonitrile is solidified and improves the adhesive force between the separator and the electrode. According to Table 1, in the example of the present invention, as an appropriate amount of succinonitrile is used, the adhesive force between the electrode and the separator is improved. In the case of the battery into which the final electrolyte solution is injected, as the succinonitrile, which existed on the interface between the separator and the electrode, is dissolved in the electrolyte solution, it does not act as a resistance, thereby exhibiting excellent cyclic performance.

First, Examples 1 to 4 are different from Comparative examples 1 and 2 only in the SN content in the electrode of the same condition. The adhesive force of the negative electrode/separator of Examples 1 to 4 is superior to that of Comparative example 1 or 2, and the cyclic characteristics of Examples 1 to 4 are also superior to those of Comparative example 1 or 2.

Specifically, in the case of Comparative example 1, if too small amount of SN is applied to the positive electrode and the negative electrode, the adhesive force is not sufficiently secured, and the capacity was low compared to 2.0C discharge. In Comparative example 2, if too much succinonitrile is applied, the adhesive force is good, but the capacity also low, compared to 2.0C discharge. Since the viscosity of the succinonitrile is high, when too much succinonitrile is applied, the ion conductivity becomes low, thereby increasing the resistance.

There is a difference in only a roll lamination pressure between Examples 5 to 7 and Comparative example 3 under the same condition. In Examples 5 to 7, as the roll lamination pressure increases, the adhesive force between the negative electrode and the separator also increases. However, in Comparative example 3, as too much roll lamination pressure is applied, the adhesive force between the negative electrode and the separator was relatively large, but the electrode was bent by excessive adhesive force. Further, the cyclic performance of Comparative example 3 was inferior to that of Examples 5 to 7.The binder materials between the positive electrode and the separator melt to thereby act as a resistance, and the separator is damaged.

The conditions of Example 5 and Comparative example 4 are the same except for the SN content in the negative electrode mixture. Herein, it is seen that when the SN content is low (Comparative example 4), the adhesive force between the negative electrode and the separator becomes too low. Further, 2.0C discharge capacity of Comparative example 4 was lower than that of Example 4.

As shown in Table 1, in the battery manufactured according to the example of the present invention, when evaluating 2.0C discharge, as the pressure increases, the resistance inside the cell tends to increase. At the same time, there is an advantage that adhesive force between the electrode and the separator may be improved within a proper pressure range. However, in an excessive high-temperature, high-pressure lamination condition, as the binder melts on the interface between the positive electrode and the separator, it acts as a resistance, and as the pores of the separator are reduced, the resistance increases.

In Comparative example 1, since the succinonitrile content was low, the adhesive force between the electrode and the separator was not improved. In Comparative example 2, since the succinonitrile content was high, the succinonitrile, which remained on the surface of the electrode and the separator, acted as a resistance, thereby deteriorating cycle characteristics. Since the lamination pressure of Comparative example 3 is greater than that of Examples 5 to 7, the binder between the positive electrode and the separator melts and acts as a resistance, and as a damage to the separator occurs, the electrode is bent and at the same time, cycle characteristics are deteriorated. Since the SN content of Comparative example 4 is smaller than that of Example 5, sufficient adhesive force between the electrode and the separator was not secured, and the cycle characteristics were not improved.

The above description is merely illustrative of the technical idea of the present invention, and those skilled in the art to which the present invention pertains may make various modifications and variations without departing from the essential characteristics of the present invention. Therefore, the embodiments disclosed in the present invention are not intended to limit the technical idea of the present invention but to describe the present invention. The scope of protection of the present invention should be interpreted by the following claims.

### [Description of reference numerals]

| | | | |
|---|---|---|---|
| 1: | secondary battery, | 10: | succinonitrile, |
| 20: | binder coating layer, | 100: | separator, |
| 200: | first electrode, negative electrode | 210: | current collector |
| 220: | negative electrode slurry layer | 300: | second electrode |

## Claims

1. A method of manufacturing a secondary battery, comprising:
a step of preparing a slurry containing a solvent and an electrode mixture containing succinonitrile (S 1);
a step of preparing an electrode by coating the slurry to a current collector and drying the slurry (S2);
a step of preparing an electrode assembly by alternately laminating the electrode and a separator (S3);
a lamination step of heating and pressing the electrode assembly (S4); and
a step of accommodating the laminated electrode assembly in a battery case and injecting an electrolyte solution (S5),
wherein the step (S2) of preparing the electrode includes:
a step of solidifying liquid succinonitrile by cooling the electrode, to which the electrode slurry has been applied, to a room temperature.

2. The method of claim 1, wherein a content of the succinonitrile is 0.1 to 5% by weight based on a total weight of the electrode mixture.

3. The method of claim 1, wherein the step (S 1) of preparing the electrode slurry includes:
a step of uniformly dispersing the succinonitrile in the electrode slurry.

4. The method of claim 1, wherein the step (S2) of preparing the electrode includes:
a step of applying the electrode slurry on one or opposite surfaces of the current collector; and
a step of drying the electrode to which the electrode slurry has been applied.

5. The method of claim 4, wherein in the step of drying the electrode slurry, a distribution of the succinonitrile is rearranged so that a content of the succinonitrile of an electrode surface layer far from the current collector becomes greater than a content of the succinonitrile of an electrode inner layer close to the current collector.

6. The method of claim 5, wherein the succinonitrile is positioned on an upper portion or surface of the electrode.

7. The method of claim 1, wherein the lamination step of heating and pressing the electrode assembly (S4) includes:
a step of heating the electrode assembly to a temperature of a melting point or more of the succinonitrile.

8. The method of claim 7, wherein a heating temperature of the electrode assembly is 57°C or more.

9. The method of claim 7, wherein the electrode assembly is pressed at a pressure of 30kgf/cm or less.

10. The method of claim 7, wherein the succinonitrile acts as a binder between the electrode and the separator.

11. The method of claim 1, wherein in the step of accommodating the laminated electrode assembly in a battery case and injecting an electrolyte solution (S5), the succinonitrile in the electrode is eluted to the electrolyte solution.

## Patentansprüche

1. Verfahren zur Herstellung einer Sekundärbatterie, umfassend:
einen Schritt, in dem eine Aufschlämmung, die ein Lösungsmittel und eine Succinonitril enthaltende Elektrodenmischung enthält, hergestellt wird (S1);
einen Schritt, in dem eine Elektrode durch Auftragen der Aufschlämmung auf einen Stromabnehmer und Trocknen der Aufschlämmung hergestellt wird (S2);
einen Schritt, in dem eine Elektrodenanordnung durch abwechselndes Laminieren der Elektrode und eines Separators hergestellt wird (S3);
einen Laminierungsschritt, in dem die Elektrodenanordnung (S4) erhitzt und gepresst wird; und
einen Schritt, in dem die laminierte Elektrodenanordnung in einem Batteriegehäuse untergebracht wird und eine Elektrolytlösung injiziert wird (S5),
wobei der Schritt (S2), in dem die Elektrode hergestellt wird, umfasst:
einen Schritt, in dem flüssiges Succinonitril durch Abkühlen der Elektrode, auf die die Elektrodenaufschlämmung aufgebracht wurde, auf eine Raumtemperatur verfestigt wird.

2. Verfahren nach Anspruch 1, wobei ein Gehalt an Succinonitril 0,1 bis 5 Gew.-%, bezogen auf das Gesamtgewicht der Elektrodenmischung, beträgt.

3. Verfahren nach Anspruch 1, wobei der Schritt (S1), in dem die Elektrodenaufschlämmung hergestellt wird, umfasst:
einen Schritt, in dem das Succinonitril in der Elektrodenaufschlämmung gleichmäßig dispergiert wird.

4. Verfahren nach Anspruch 1, wobei der Schritt (S2), in dem die Elektrode hergestellt wird, umfasst:
einen Schritt, in dem die Elektrodenaufschlämmung auf eine oder gegenüberliegende Oberflächen des Stromabnehmers aufgetragen wird; und
einen Schritt, in dem die Elektrode, auf die die Elektrodenaufschlämmung aufgetragen wurde, getrocknet wird.

5. Verfahren nach Anspruch 4, wobei in dem Schritt, in dem die Elektrodenaufschlämmung getrocknet wird, eine Verteilung des Succinonitrils so umgeordnet wird, dass ein Gehalt des Succinonitrils auf einer Elektrodenoberflächenschicht, die weit von dem Stromabnehmer entfernt ist, größer wird als ein Gehalt des Succinonitrils auf einer inneren Elektrodenschicht, die nahe an dem Stromabnehmer liegt.

6. Verfahren nach Anspruch 5, wobei das Succinonitril auf einem oberen Teil oder Oberfläche der Elektrode angeordnet ist.

7. Verfahren nach Anspruch 1, wobei der Laminierungsschritt, in dem die Elektrodenanordnung erhitzt und gepresst wird (S4), umfasst:
einen Schritt, in dem die Elektrodenanordnung auf eine Temperatur, die einem Schmelzpunkt oder einem höheren Wert des Succinonitrils entspricht, erhitzt wird.

8. Verfahren nach Anspruch 7, wobei die Heiztemperatur der Elektrodenanordnung 57 °C oder mehr beträgt.

9. Verfahren nach Anspruch 7, wobei die Elektrodenanordnung mit einem Druck von 30 kgf/cm oder weniger gepresst wird.

10. Verfahren nach Anspruch 7, wobei das Succinonitril als Bindemittel zwischen der Elektrode und dem Separator wirkt.

11. Verfahren nach Anspruch 1, wobei in dem Schritt, in dem die laminierte Elektrodenanordnung in einem Batteriegehäuse untergebracht wird und eine Elektrolytlösung injiziert wird (S5), das Succinonitril in der Elektrode in die Elektrolytlösung eluiert wird.

## Revendications

1. Procédé de fabrication d'une batterie secondaire, comprenant :
une étape de préparation d'une pâte contenant un solvant et d'un mélange d'électrode contenant du succinonitrile (S1) ;
une étape de préparation d'une électrode par revêtement de la pâte sur un collecteur de courant et séchage de la pâte (S2) ;
une étape de préparation d'un ensemble électrode par stratification en alternance de l'électrode et d'un séparateur (S3) ;
une étape de stratification consistant à chauffer et presser l'ensemble électrode (S4) ; et
une étape de réception de l'ensemble électrode stratifié dans un logement de batterie et d'injection d'une solution d'électrolyte (S5),
dans lequel l'étape (S2) de préparation de l'électrode comporte :
une étape de solidification de succinonitrile liquide par refroidissement de l'électrode, sur laquelle la pâte d'électrode a été appliquée, à une température ambiante.

2. Procédé selon la revendication 1, dans lequel un contenu du succinonitrile est de 0,1 à 5 % en poids sur la base d'un poids total du mélange d'électrode.

3. Procédé selon la revendication 1, dans lequel l'étape (S1) de préparation de la pâte d'électrode comporte : une étape de dispersion uniforme du succinonitrile dans la pâte d'électrode.

4. Procédé selon la revendication 1, dans lequel l'étape (S2) de préparation de l'électrode comporte :
une étape d'application de la pâte d'électrode sur une surface ou des surfaces opposées du collecteur de courant, et
une étape de séchage de l'électrode sur laquelle la pâte d'électrode a été appliquée.

5. Procédé selon la revendication 4, dans lequel dans l'étape de séchage de la pâte d'électrode, une distribution du succinonitrile est réagencée de sorte qu'un contenu du succinonitrile d'une couche de surface d'électrode éloignée du collecteur de courant devienne supérieur à un contenu du succinonitrile d'une couche interne d'électrode proche du collecteur de courant.

6. Procédé selon la revendication 5, dans lequel le succinonitrile est positionné sur une partie ou surface supérieure de l'électrode.

7. Procédé selon la revendication 1, dans lequel l'étape de stratification consistant à chauffer et presser l'ensemble électrode (S4) comporte :
une étape de chauffage de l'ensemble électrode à une température égale ou supérieure à un point de fusion du succinonitrile.

8. Procédé selon la revendication 7, dans lequel une température de chauffage de l'ensemble électrode est de 57 °C ou plus.

9. Procédé selon la revendication 7, dans lequel l'ensemble électrode est pressé à une pression de 30 kgf/cm ou moins.

10. Procédé selon la revendication 7, dans lequel le succinonitrile agit comme un liant entre l'électrode et le séparateur.

11. Procédé selon la revendication 1, dans lequel dans l'étape de réception de l'ensemble électrode stratifié dans un logement de batterie et d'injection d'une solution électrolytique (S5), le succinonitrile dans l'électrode est élué dans la solution électrolytique.
